# EUROPEAN PATENT APPLICATION

(11) **EP 4 400 829 A1**
(43) Date of publication of application: **17.07.2024**
(21) Application number: 24151771.3
(22) Date of filing: 15.01.2024
(51) Int. Cl.: G01N 21/25, G01N 21/27, G01N 21/31, G01N 21/82, G01N 35/00, G01N 35/02

(54) **SAMPLE ANALYZER AND METHOD FOR CONTROLLING SAMPLE ANALYZER**

(30) Priority: 16.01.2023 CN 202310091961
(71) Applicant: Shenzhen Mindray Bio-Medical Electronics Co., Ltd., Shenzhen, Guangdong 518057 (CN)
(72) Inventor: FANG, Tao, Shenzhen 518057 (CN); DAI, Yong, Shenzhen 518057 (CN); ZHOU, Lihua, Shenzhen 518057 (CN); HE, Yun, Shenzhen 518057 (CN)
(74) Representative: KIPA AB

(57) **Abstract**

Sample analyzers and a method for controlling the sample analyzer are provided. The sample analyzer includes a reaction device, a detection device, a processor and a display. The reaction device is configured to obtain a reaction product. Multiple types of emitting lights are emitted after the irradiation light from the detection device irradiates the reaction product. An optical signal acquisition component is configured to acquire, in each light acquiring period, optical signals corresponding to a detection wavelength and at least one wavelength other than the detection wavelength for at least one type of emitting light. The processor is configured to calculate, for the at least one type of emitting light, optical data corresponding to the detection wavelength and the at least one wavelength other than the detection wavelength in each light acquiring period. The display is configured to display the optical data in multiple light acquiring periods.

## Description

### TECHNICAL FIELD

The disclosure relates to the technical field of medical equipment, and in particular to a sample analyzer and a method for controlling the sample analyzer.

### BACKGROUND

A sample analyzer is a device for detecting and analyzing samples. The sample analyzer may periodically detect a reaction product such as a reaction liquid prepared by reaction of the sample and a reagent in a reaction process, and obtain an optical signal corresponding to a primary wavelength or optical signals corresponding to primary and secondary wavelengths. A reaction curve at the primary wavelength may be obtained based on the optical signal corresponding to the primary wavelength or reaction curves at the primary and secondary wavelengths may be obtained based on the optical signals corresponding to the primary and secondary wavelengths. A detection result of the sample may be obtained based on information such as an amplitude and a rate of change of the reaction curve corresponding to the primary wavelength or the primary and secondary wavelengths. In the related art, only the reaction curve and the detection result corresponding to the primary wavelength or the primary and secondary wavelengths are generally displayed, i.e., a small amount of information is displayed, which is not convenient for a user to review the detection result or conduct troubleshooting.

### SUMMARY

The disclosure provides a sample analyzer and a method for controlling the sample analyzer, which can provide richer information for a user and facilitate the user to review a detection result or conduct troubleshooting.

In a first aspect, there is provided a sample analyzer in an embodiment of the disclosure. The sample analyzer includes a reaction device, a detection device, a processor and a display.

The reaction device is configured to provide a carrying component in which a reagent reacts with a sample to be detected to obtain a reaction product in the carrying component.

The detection device is configured to repeatedly detect the reaction product carried by the carrying component over a plurality of light acquiring periods. The detection device at least includes a light source component and an optical signal acquisition component. The light source component is configured to generate an irradiation light, the irradiation light irradiates the reaction product carried by the carrying component and a plurality of types of emitting lights are emitted as a result of the irradiation. The plurality of types of emitting lights include a transmitted light, a reflected light and a scattered light.

The optical signal acquisition component is configured to acquire, in each of the plurality of light acquiring periods, optical signals, corresponding to a detection wavelength and at least one wavelength other than the detection wavelength, for at least one type of emitting light among the plurality of types of emitting lights. The detection wavelength includes a primary wavelength, or a primary wavelength and a secondary wavelength.

The processor is configured to calculate, for the at least one type of emitting light, optical data corresponding to the detection wavelength and the at least one wavelength other than the detection wavelength in each of the plurality of light acquiring periods based on the optical signals acquired in the light acquiring period. The optical data characterizes at least one of an absorption degree, a reflection degree and a scattering degree of the irradiation light by the reaction product.

The display is configured to display, for the at least one type of emitting light, the optical data corresponding to the detection wavelength and the at least one wavelength other than the detection wavelength in the plurality of light acquiring periods.

In a second aspect, there is provided a sample analyzer in an embodiment of the disclosure. The sample analyzer includes a reaction device, a detection device and a display.

The reaction device is configured to provide a carrying component in which a reagent reacts with a sample to be detected to obtain a reaction product in the carrying component.

The detection device is configured to repeatedly detect the reaction product carried by the carrying component over a plurality of light acquiring periods. The detection device at least includes a light source component and an optical signal acquisition component. The light source component is configured to generate an irradiation light, the irradiation light irradiates the reaction product carried by the carrying component and a plurality of types of emitting lights are emitted as a result of the irradiation. The plurality of types of emitting lights include a transmitted light, a reflected light and a scattered light. The optical signal acquisition component is configured to acquire, in at least one of the plurality of light acquiring periods, a signal sequence corresponding to at least one wavelength for at least one type of emitting light among the plurality of types of emitting lights. The signal sequence includes light intensities of a plurality of optical signals and time for sampling each of the plurality of optical signals.

The display is configured to: display, for the at least one type of emitting light, the signal sequence corresponding to the at least one wavelength in the at least one of the plurality of light acquiring periods.

In a third aspect, there is provided a method for controlling a sample analyzer in an embodiment of the disclosure. The method includes the following operations.

A light source component of the sample analyzer is controlled to generate an irradiation light. The irradiation light irradiates a reaction product carried by a carrying component and a plurality of types of emitting lights are emitted as a result of the irradiation. The plurality of types of emitting lights include a transmitted light, a reflected light and a scattered light, and the reaction product is prepared by reaction of a reagent with a sample to be detected.

Optical signals corresponding to a detection wavelength and at least one wavelength other than the detection wavelength are acquired in each of a plurality of light acquiring periods for at least one type of emitting light among the plurality of types of emitting lights, to repeatedly detect the reaction product carried by the carrying component over the plurality of light acquiring periods. The detection wavelength includes a primary wavelength, or a primary wavelength and a secondary wavelength.

For the at least one type of emitting light, optical data corresponding to the detection wavelength and the at least one wavelength other than the detection wavelength in each of the plurality of light acquiring periods is calculated based on the optical signals acquired in the light acquiring period. The optical data characterizes at least one of an absorption degree, a reflection degree and a scattering degree of the irradiation light by the reaction product.

The optical data corresponding to the detection wavelength and the at least one wavelength other than the detection wavelength in the plurality of light acquiring periods for the at least one type of emitting light is displayed.

In a fourth aspect, there is provided a method for controlling a sample analyzer in an embodiment of the disclosure. The method includes the following operations.

A light source component of the sample analyzer is controlled to generate an irradiation light. The irradiation light irradiates a reaction product carried by a carrying component and a plurality of types of emitting lights are emitted as a result of the irradiation. The plurality of types of emitting lights include a transmitted light, a reflected light and a scattered light, and the reaction product is prepared by reaction of a reagent with a sample to be detected.

A signal sequence corresponding to at least one wavelength for at least one type of emitting light among the plurality of types of emitting lights is acquired in at least one of a plurality of light acquiring periods. The signal sequence includes light intensities of a plurality of optical signals and time for sampling each of the plurality of optical signals. The reaction product carried by the carrying component is detected by the sample analyzer repeatedly over the plurality of light acquiring periods.

The signal sequence corresponding to the at least one wavelength in the at least one of the plurality of light acquiring periods is displayed for the at least one type of emitting light.

The sample analyzer and the method for controlling the sample analyzer are provided in the embodiments of the disclosure. The sample analyzer includes a reaction device, a detection device, a processor and a display. The reaction device is configured to provide a carrying component in which a reagent reacts with a sample to be detected to obtain a reaction product in the carrying component. The detection device at least includes a light source component and an optical signal acquisition component. The light source component is configured to generate an irradiation light, the irradiation light irradiates the reaction product carried by the carrying component and a plurality of types of emitting lights are emitted as a result of the irradiation. The plurality of types of emitting lights include a transmitted light, a reflected light and a scattered light. The optical signal acquisition component is configured to acquire, in each of a plurality of light acquiring periods, optical signals, corresponding to a detection wavelength and at least one wavelength other than the detection wavelength, for at least one type of emitting light among the plurality of types of emitting lights. The detection wavelength includes a primary wavelength, or a primary wavelength and a secondary wavelength. The processor is configured to calculate, for the at least one type of emitting light, optical data corresponding to the detection wavelength and the at least one wavelength other than the detection wavelength in each of the plurality of light acquiring periods based on the optical signals acquired in the light acquiring period. The display is configured to display the optical data corresponding to the detection wavelength and the at least one wavelength other than the detection wavelength in the plurality of light acquiring periods for the at least one type of emitting light. Therefore, the disclosure can provide the user with richer information obtained in the detection process of the sample analyzer and facilitate the user to review the detection result or conduct troubleshooting.

It should be understood that the foregoing general description and the following detailed description are exemplary and explanatory only and not intended to limit the content disclosed in the embodiments of the disclosure

### BRIEF DESCRIPTION OF THE DRAWINGS

In order to more clearly illustrate the solutions in the embodiments of the disclosure, the accompanying drawings to be used in the description of the embodiments will be briefly introduced below. It is apparent that the drawings in the following description represent some embodiments of the disclosure, and a person of ordinary skill in the art can obtain other drawings according to these drawings without paying inventive efforts.
FIG. 1 is a schematic structural diagram of a sample analyzer according to an embodiment of the disclosure.
FIG. 2 is a schematic block diagram of a sample analyzer in an implementation.
FIG. 3 is a schematic block diagram of a sample analyzer in another implementation.
FIG. 4 is a schematic diagram of a reaction curve in an implementation.
FIG. 5 is a schematic diagram of a display of optical data and signal sequences in an implementation.
FIG. 6 is a schematic diagram of a display of optical data in an implementation.
FIG. 7 is a schematic diagram of a display of signal sequences in an implementation.
FIG. 8 is a schematic diagram of a display of signal sequences in another implementation.
FIG. 9 is a flowchart of a method for controlling a sample analyzer according to an embodiment of the disclosure.
FIG. 10 is a flowchart of a method for controlling a sample analyzer according to another embodiment of the disclosure.

List of reference numerals: 110: reaction device; 111: carrying component; 120: detection device; 121: light source component; 122: optical signal acquisition component; 130: processor; 140: display; 10: functional module; 11: sample component; 12: sample dispensing mechanism; 13: reagent component; 14: reagent dispensing mechanism; 15: mixing mechanism; 16: reaction component; 17: optical detection component; 20: input module; 30: display module; 40: memory; 50: processor.

### DETAILED DESCRIPTION

Solutions in the embodiments of the disclosure will be described clearly and completely with reference to the accompanying drawings in the embodiments of the disclosure. It is apparent that the embodiments described herein are a part of the embodiments of the disclosure rather than all of the embodiments of the disclosure. All other embodiments obtained by a person of ordinary skill in the art based on the embodiments of the disclosure without creative efforts shall fall within the scope of protection of the disclosure.

The flowcharts illustrated in the drawings are illustrative only and do not necessarily include all contents and operations/steps, nor must be performed in the described order. For example, some operations/steps may be decomposed, combined or partially merged, so that the actual order of execution may change according to actual situations.

Some embodiments of the disclosure will be described in detail below with reference to the accompanying drawings. The following embodiments and features in the embodiments may be combined with each other without conflict.

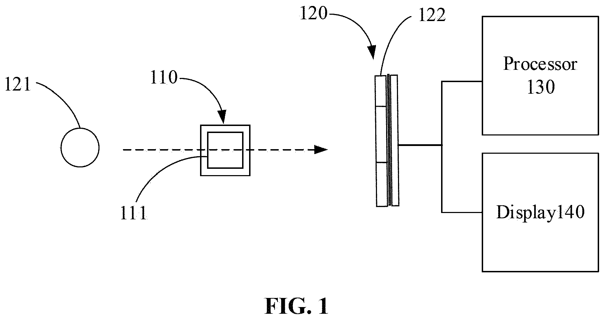

With reference to FIG. 1, FIG. 1 is a schematic structural diagram of a sample analyzer according to an embodiment of the disclosure.

The sample analyzer is a device for testing and analyzing a sample. In some implementations, the sample analyzer may include but is not limited to at least one of: a biochemical analyzer, an immunoassay analyzer, or a coagulation analyzer.

A structure of the sample analyzer in some implementations is described before describing the disclosure in detail.

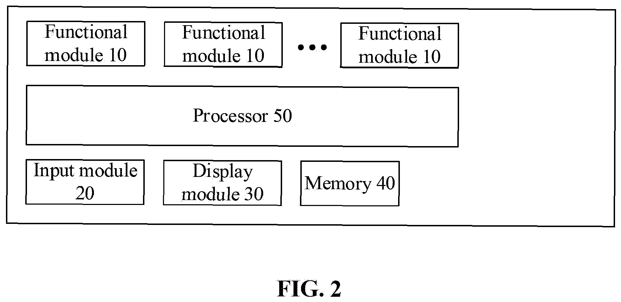

With reference to FIG. 2, an embodiment discloses a sample analyzer including at least one functional module 10 (or one or more functional modules 10), an input module 20, a display module 30, a memory 40, and a processor 50, which are described below respectively.

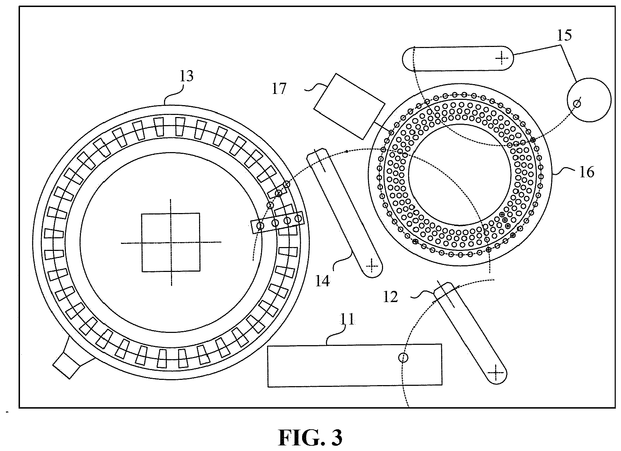

Each of the functional modules 10 is configured to perform at least one function required in the sample analysis process, and these functional modules 10 cooperate together to complete the sample analysis, to obtain a sample analysis result. FIG. 3 illustrates a sample analyzer according to an embodiment, and the functional module 10 is illustrated therein. For example, the functional module 10 may include: a sample component 11, a sample dispensing mechanism 12, a reagent component 13, a reagent dispensing mechanism 14, a mixing mechanism 15, a reaction component 16, a detection device 17, and the like.

The sample component 11 is configured to carry a sample. In some examples, the sample component 11 may include a Sample Delivery Module (SDM) and a front-end track. In other examples, the sample component 10 may also be a sample disk including multiple sample positions for placing, for example, sample tubes. The sample disk may schedule a sample to a corresponding position (such as a position for the sample dispensing mechanism 12 to aspirate the sample) by rotating its disc structure.

The sample dispensing mechanism 12 is configured to aspirate the sample and dispense the sample into a reaction cup to which the sample is to be added. For example, the sample dispensing mechanism 12 may include a sample probe, which is moved in a two-dimensional or three-dimensional space by means of a two-dimensional or three-dimensional driving mechanism, so that the sample probe may be moved to aspirate the sample carried in the sample component 11 and moved to the reaction cup to which the sample is to be added, and discharge the sample into the reaction cup.

The reagent component 13 is configured to carry a reagent. In an embodiment, the reagent component 13 may be a reagent disk, and the reagent disk is arranged in a disc structure and has a plurality of positions for carrying reagent containers. The reagent component 13 may be rotated and drive the reagent containers carried therein to rotate to a certain position, for example, the position where the reagent is aspirated by the reagent dispensing mechanism 14. There may be one or more reagent components 13.

The reagent dispensing mechanism 14 is configured to aspirate the reagent and dispense the reagent into the reaction cup to which the reagent is to be added. In an embodiment, the reagent dispensing mechanism 14 may include a reagent probe, which is moved in a two-dimensional or three-dimensional space by means of a two-dimensional or three-dimensional driving mechanism, so that the reagent probe may be moved to aspirate the reagent carried in the reagent component 13 and moved to the reaction cup to which the reagent is to be added, and discharge the reagent into the reaction cup.

The mixing mechanism 15 is configured to mix a to-be-mixed reaction product in the reaction cup. There may be one or more mixing mechanisms 15.

The reaction component 16 has at least one placement position for placing the reaction cup and incubating the reaction product in the reaction cup. For example, the reaction component 16 may be a reaction disk, which is arranged in a disc structure and has one or more placement positions for placing the reaction cups. The reaction disk may be rotated and drive the reaction cups therein to rotate, to schedule the reaction cups in the reaction disk and incubate the reaction product in the reaction cup.

The detection device 17 is configured to optically detect the incubated reaction product to obtain reaction data of the sample. In an embodiment, the detection device 17 is separately arranged outside the reaction component 16.

The above describes some examples of the functional module 10, and the following description will continue to explain other components and structures in the sample analyzer.

The input module 20 is configured to receive an input from a user. Generally, the input module 20 may be a mouse, a keyboard, etc., and in some cases may also be a touch screen that allows the user to input and display content, that is, the input module 20 and the display module 30 are integrated in this example. In some examples, the input module 20 may be a speech input device or the like that provides a speech recognition function.

The display module 30 may be configured to display information. In some embodiments, the sample analyzer itself may be integrated with a display module. In some embodiments, the sample analyzer may be connected to a computer device (such as a computer) to display information through a display unit (e.g. a display screen) of the computer device. All of these embodiments fall within the scope of the display module 30 as defined and protected herein.

The memory 40 is configured to store, for example, the detection result of the detection device 17, and may also be configured to store data (such as the detection result of the sample) obtained by processing the detection result by the processor 50.

For the sake of explanation, a biochemical analyzer is illustrated in the following description as an example of the sample analyzer.

As illustrated in FIG. 1, a sample analyzer according to an embodiment of the disclosure includes a reaction device 110, a detection device 120, a processor 130 and a display 140.

The display 140 may include a display arranged integrally with the reaction device 110, the detection device 120, and the processor 130. Alternatively, the display may also include an external display, for example, the reaction device 110, the detection device 120 and the processor 130 are arranged integrally and externally connected to the display 140, which is not limited thereto. For example, the reaction device 110 and the detection device 120 may be arranged integrally and communicate with the processor 130 and the display 140 which are arranged integrally (e.g. a laptop, a tablet computer, etc.).

The reaction device 110 is configured to provide a carrying component 111 in which a reagent reacts with a sample to be detected to obtain a reaction product in the carrying component 111.

In some embodiments, the carrying component 111 includes a reaction container such as a reaction cup. The sample analyzer further includes a sample loading device and a reagent dispensing device. The sample loading device is configured to aspirate the sample to be detected from the sample container and transport the aspirated sample to the reaction cup. The reagent dispensing device is configured to dispense the reagent into the reaction cup, and the reagent is reacted with the sample to be detected to prepare a reaction product, that is, the reaction product may include the reaction product in the reaction cup. For example, the sample loading device may include the sample dispensing mechanism 12 in FIG. 3, and the reagent dispensing device may include the reagent dispensing mechanism 14 in FIG. 3, which is not limited thereto. The reaction device 110 is configured to incubate a reaction liquid formed by the sample to be detected and the reagent in the reaction cup to obtain the reaction product. For example, the reaction device 110 includes a reaction component 16 in FIG. 3 and may further include the mixing mechanism 15.

In other embodiments, the carrying component 111 may include a special structure in which a reagent is cured, such as a multilayer film. The sample is directly added to the carrying component 111, and the reagent cured on the carrying component 111 is dissolved by using water in the sample as solvent, and then the dissolved reagent is reacted with the composition to be detected in the sample to obtain the reaction product. The carrying component 111 may be called a carrying component 111 carrying the reaction product.

For the sake of description, the embodiments of the disclosure are mainly illustrated by taking a reaction cup as an example of the carrying component 111 and a reaction product as an example of the reaction product.

In some embodiments, the detection device 120 of the sample analyzer is configured to repeatedly detect the reaction product carried by the carrying component 111 over a plurality of light acquiring periods. Illustratively, the detection device 120 periodically detects the reaction product carried by each carrying component 111, and each detection period may be referred to as a light acquiring period. That is to say, a sample to be detected in the carrying component is optically detected a plurality of times, and each detection is a light acquiring period, so as to obtain optical detections results of the sample to be detected in a plurality of light acquiring periods.

Illustratively, the reaction cup carrying the reaction product moves relative to the detection device 120. Illustratively, with reference to FIG. 3, the reaction cup carried by the reaction component 16 rotates relative to the optical detection component 17. During the rotation, the optical detection component 17 detects the liquid in the reaction cup once when the reaction cup passes through the optical detection component 17, to form the light acquiring period.

As illustrated in FIG. 1, the detection device 120 includes at least a light source component 121 and an optical signal acquisition component 122. The light source component 121 is configured to generate an irradiation light, the irradiation light irradiates the reaction product carried by the carrying component 111, and an emitting light is emitted after at least one of transmission, scattering and reflection by the carrying component 111 and/or the reaction product. Specifically, a plurality of types of emitting lights are emitted after the irradiation light emitted from the light source component 121 irradiates the reaction product carried by the carrying component 111, and the plurality of types of emitting lights include a transmitted light, a reflected light and a scattered light.

The optical signal acquisition component 122 is configured to acquire an optical signal emitted after the irradiation light irradiates the reaction product.

For example, with reference to FIG. 1, the optical signal acquisition component 122 and the light source component 121 are arranged on different sides of the reaction cup. For example, the optical signal acquisition component 122 and the light source component 121 are arranged on opposite sides of the reaction cup, respectively. The irradiation light of the light source component 121 irradiates the reaction cup or the liquid in the reaction cup, and the irradiation light is transmitted and/or scattered by the reaction cup or the liquid in the reaction cup to form the emitting light, which may be called a transmitted light. The transmitted light may be emitted to the optical signal acquisition component 122. Optionally, the optical signal acquisition component 122 and the light source component 121 may be arranged on the same side of the carrying component 111, and the irradiation light from the light source component 121 is reflected by the carrying component 111 and/or the reaction product to form the emitting light, which may be called a reflected light. The reflected light may be emitted to the optical signal acquisition component 122. Optionally, the optical signal acquisition component 122, the reaction cup and the light source component 121 are arranged such that a straight line connecting the optical signal acquisition component 122 and the reaction cup forms a certain included angle with a straight line connecting the light source component 121 and the reaction cup, and the included angle is greater than or equal to 90 degrees and less than 180 degrees, for example, 135 degrees. The irradiation light of the light source component 121 irradiates the reaction cup or the liquid in the reaction cup, and the irradiation light is refracted by the reaction cup or the liquid in the reaction cup to form the emitting light, which may be called a refracted light. The refracted light may be emitted to the optical signal acquisition component 122.

Illustratively, the optical signal acquisition component 122 includes a photoelectric sensor. Optionally, the light source component 121 and the optical signal acquisition component 122 may be a light source component and the photoelectric sensor in a photometer, respectively. For example, the detection device 120 includes the detection device 17 in FIG. 3.

Specifically, the optical signal acquisition component 122 is configured to acquire, in each of the plurality of light acquiring periods, optical signals corresponding to a detection wavelength and at least one wavelength other than the detection wavelength for at least one type of emitting light among the plurality of types of emitting lights. The detection wavelength includes a primary wavelength or primary and secondary wavelengths (i.e., the primary wavelength and the secondary wavelength). In case that the detection wavelength includes the primary wavelength and the secondary wavelength, the optical signal acquisition component 122 acquires, in each of the plurality of light acquiring periods, optical signals corresponding to at least three wavelengths (the primary wavelength, secondary wavelength and at least one wavelength other than the detection wavelength) for the at least one type of emitting light emitted after the irradiation light irradiates the reaction product. In case that the detection wavelength includes the primary wavelength, the optical signal acquisition component 122 acquires, in each of the plurality of light acquiring periods, optical signals corresponding to at least two wavelengths (the primary wavelength and at least one wavelength other than the detection wavelength) for the at least one type of emitting light emitted after the irradiation light irradiates the reaction product. Alternatively, for example, in case that the detection wavelength includes the primary wavelength, the optical signal acquisition module 122 may acquire optical signals corresponding to a plurality of wavelengths other than the detection wavelength to obtain the optical signals corresponding to three or more wavelengths, which is not limited thereto.

The wavelengths corresponding to the optical signals acquired by the optical signal acquisition component 122 may be the same or different for different types of emitting lights. For example, the optical signal acquisition component 122 may acquire optical signals corresponding to the detection wavelength and the at least one wavelength other than the detection wavelength for the transmitted light. The optical signal acquisition component 122 may acquire, for the scattered light, an optical signal corresponding to the detection wavelength or an optical signal corresponding to at least one wavelength other than the detection wavelength. Alternatively, for example, the optical signal acquisition component 122 may acquire, for the scattered light, optical signals corresponding to the detection wavelength and the at least one wavelength other than the detection wavelength. The optical signal acquisition component 122 may acquire, for the transmitted light, an optical signal corresponding to the detection wavelength or an optical signal corresponding to at least one wavelength other than the detection wavelength.

For the sake of description, the embodiments of the disclosure are mainly illustrated by an example in which the detection wavelength includes the primary wavelength and the secondary wavelength and optical signals corresponding to at least three wavelengths are acquired by the optical signal acquisition component 122. The optical signal acquisition component 122 may acquire optical signals corresponding to at least three wavelengths, for example, eight wavelengths, twelve wavelengths or sixteen wavelengths and the like. At least three of the optical signals have different wavelengths.

Illustratively, the optical signals acquired by the optical signal acquisition component 122 may be stored in a memory and processed by the processor 130.

In some implementations, the irradiation lights irradiate the reaction cup or the liquid in the reaction cup simultaneously, and optical signals corresponding to at least three wavelengths are acquired by the optical signal acquisition component 122 simultaneously, which is not limited thereto. Illustratively, irradiation lights with different wavelengths may irradiate the reaction cup or the liquid in the reaction cup at different times in a light acquiring period, and the optical signal acquisition component 122 acquires the optical signals corresponding to the at least three wavelength at the different times in the light acquiring period.

Illustratively, the detection device 120 further includes a first light splitting component which splits the emitting light from the reaction cup into optical signals corresponding to at least three wavelengths (a primary wavelength, a secondary wavelength, and at least one wavelength other than the detection wavelength). For example, the light source component 121 irradiates the reaction cup by using a light with mixed wavelengths (such as a white light), the light with mixed wavelengths is transmitted and/or scattered by the reaction cup to form the emitting light (which may be called the transmitted light), and the emitting light is split by the first light splitting component to form at least three optical signals with different wavelengths. The optical signal acquisition component 122 may acquire the optical signals with at least three wavelengths. The first light splitting component may be referred to as a post light splitting component, and the irradiation lights corresponding to the optical signals with at least three wavelengths irradiate the same position of the reaction cup or of the liquid in the reaction cup simultaneously.

Illustratively, the light source component 121 is a light source array, and different light sources in the light source array may emit irradiation lights with different wavelengths which are emitted to the optical signal acquisition component 122 after irradiating the reaction cup. The optical signal acquisition component 122 may acquire optical signals corresponding to at least three wavelengths. For example, light sources in the light source array are arranged along a moving direction of the reaction cup, and the reaction cup passes through each light source in the light source array in sequence. Various light sources corresponding to different wavelengths irradiate the reaction cup in sequence, and the emitting lights from the reaction cup are emitted to the optical signal acquisition component 122.

Illustratively, the detection device 120 further includes a second light splitting component which splits the irradiation light generated by the light source component 121 into irradiation lights with at least three wavelengths. The irradiation lights with at least three wavelengths are emitted to the optical signal acquisition component 122 after irradiating the reaction cup. The optical signal acquisition component 122 may acquire the optical signals corresponding to the at least three wavelengths. The second light splitting component may be referred to as a front light splitting component.

In some embodiments, the optical signal acquisition component 122 acquires a signal sequence corresponding to any of the detection wavelength and the at least one wavelength other than the detection wavelength in each light acquiring period. The signal sequence includes light intensities of a plurality of optical signals and time for sampling each of the plurality of optical signals. That is, the optical signal acquisition component 122 samples the optical signal corresponding to each wavelength repeatedly in each light acquiring period for the at least one type of emitting light, and a sampling value for each wavelength may be obtained in each sampling. The sampling value may be referred to as an optical signal value or an analog-to-digital (AD) value which, for example, may be a signal intensity in digital form obtained by AD conversion. For example, signal strengths of a plurality of optical signals may be obtained for each wavelength in each light acquiring period.

For example, the optical signal acquisition component 122 may repeatedly acquire a plurality of light intensities of the optical signals corresponding to each wavelength over each light acquiring period for the at least one type of emitting light, to obtain a signal sequence corresponding to each wavelength in each light acquiring period. For example, the number of times for acquiring the optical signals corresponding to each wavelength in each light acquiring period may be determined based on a hardware sampling rate, such as an AD conversion capability of an AD conversion device in the optical signal acquisition component 122 and/or a processing capability of the processor 130. For example, the number of times for acquiring the optical signals corresponding to each wavelength in each light acquiring period is at least ten, for example, the number may range from dozens to thousands. For example, a signal sequence corresponding to each wavelength in each light acquiring period may include light intensities of fifty optical signals, and which is not limited thereto.

In other implementations, the optical signal acquisition component 122 acquires one light intensity for each wavelength in each light acquiring period, that is, each wavelength is sampled once in each light acquiring period, and each sampling may obtain a sampling value corresponding to each wavelength. The sampling value may be referred to as an AD value which, for example, may be a signal intensity in digital form obtained by AD conversion. For example, a signal intensity of one optical signal may be obtained for each wavelength in each light acquiring period.

The optical signal acquired by the optical signal acquisition component 122 is difficult to be directly related to concentration of a certain substance in the reaction system. Thus, the optical signal may be converted into a value, which may have a specific relationship with the concentration of the substance to be detected, for example, the value is proportional to the concentration, and the value may be called optical data.

Illustratively, the optical data is used for characterizing at least one of an absorption degree, a reflection degree or a scattering degree of the irradiation light by the reaction product. For example, the optical data characterizing the absorption degree of the irradiation light by the reaction product may be determined based on the optical signal of the transmitted light, or the optical data characterizing the reflection degree of the irradiation light by the reaction product may be determined based on the optical signal of the reflected light, or the optical data characterizing the scattering degree of the irradiation light by the reaction product may be determined based on the optical signal of the scattered light. Illustratively, the optical data includes at least one of an absorbance, a transmittance or a scattering degree. The absorbance and the transmittance may be used for characterizing an absorption degree or a reflection degree of the irradiation light by the reaction product, and the scattering degree may be used for characterizing the scattering degree of the irradiation light by the reaction product. For ease of explanation, the optical data including the absorbance is taken as an example.

Specifically, the processor 130 is configured to calculate the optical data corresponding to the detection wavelength and the at least one wavelength other than the detection wavelength in each of the plurality of light acquiring periods based on the optical signals acquired in the light acquiring period for the at least one type of emitting light.

In some implementations, the processor 130 is configured to calculate the optical data corresponding to at least three wavelengths in each of the plurality of light acquiring periods based on the optical signals corresponding to the at least three wavelengths acquired in the light acquiring period for the at least one type of emitting light. For example, one or more pieces of optical data corresponding to each wavelength in each light acquiring period are calculated.

For different types of emitting lights, the processor 130 may be configured to calculate optical data corresponding to the same wavelength or to calculate optical data corresponding to different wavelengths. Illustratively, the processor 130 may be configured to calculate the optical data corresponding to the detection wavelength and the at least one wavelength other than the detection wavelength in the plurality of light acquiring periods for the transmitted light; the processor 130 may be configured to calculate, for the scattered light, the optical data corresponding to the detection wavelength in the plurality of light acquiring periods or calculate, for the scattered light, the optical data corresponding to the at least one wavelength other than the detection wavelength in the plurality of light acquiring periods, which is not limited thereto. Alternatively, the processor 130 may be configured to calculate, for the scattered light, the optical data corresponding to the detection wavelength and the at least one wavelength other than the detection wavelength in the plurality of light acquiring periods; the processor 130 may be configured to calculate, for the transmitted light, the optical data corresponding to the detection wavelength in the plurality of light acquiring periods or calculate, for the transmitted light, the optical data corresponding to the at least one wavelength other than the detection wavelength in the plurality of light acquiring periods.

For example, in case that the carrying component 111 is a reaction cup, the optical data corresponding to each wavelength in each light acquiring period includes at least one of the following information after the irradiation light with the wavelength irradiates the reaction product in the light acquiring period: the absorbance of the irradiation light by the reaction product; the reflectance of the irradiation light by the reaction product; and the scattering rate of the irradiation light by the reaction product.

For example, the optical data corresponding to each wavelength in each of the plurality of light acquiring periods for the transmitted light includes the absorbance of the irradiation light by the reaction product after the irradiation light with the wavelength irradiates the reaction product in the light acquiring period. The optical data corresponding to each wavelength in each of the plurality of light acquiring periods for the reflected light includes the reflectance of the irradiation light by the reaction product after the irradiation light with the wavelength irradiates the reaction product in the light acquiring period. The optical data corresponding to each wavelength in each of the plurality of light acquiring periods for the scattered light includes the scattering rate of the irradiation light by the reaction product after the irradiation light with the wavelength irradiates the reaction product in the light acquiring period.

For example, for the transmitted light, the absorbance may be determined based on the light intensity of the optical signal acquired by the optical signal acquisition component 122 and the light intensity of the irradiation light from the light source component 121.

For example, for the transmitted light, the processor 130 may calculate one or more absorbances for each wavelength in each light acquiring period based on light intensities of one or more optical signals corresponding to the wavelength in the light acquiring period.

Illustratively, the processor 130, when calculating the optical data corresponding to the detection wavelength and the at least one wavelength other than the detection wavelength in each of the plurality of light acquiring periods based on the optical signals acquired in said light acquiring period, is configured to calculate the optical data corresponding to each wavelength in each of the plurality of light acquiring periods based on the signal sequence corresponding to the wavelength in the light acquiring period. For example, each signal sequence may correspond to a certain light acquiring period and a certain wavelength, and optical data such as the absorbance corresponding to the light acquiring period and the wavelength may be determined based on the signal sequence. The process may be repeated for multiple wavelengths in each light acquiring period, and the optical data such as the absorbances for the multiple wavelengths in multiple light acquiring periods may be obtained.

In some implementations, the processor 130 is further configured to determine a detection result of the sample to be detected based on the optical data, for example, determine the detection result of the sample to be detected based on the optical data corresponding to the at least one type of emitting light. Illustratively, the processor is configured to determine a reaction curve based on the optical data corresponding to the at least one type of emitting light, and determine the detection result of the sample to be detected based on the reaction curve.

Illustratively, the reaction curve corresponding to each wavelength, such as an absorbance reaction curve, may be determined based on the optical data such as the absorbances corresponding to the wavelength in the plurality of light acquiring periods. The detection result of the sample to be detected may be obtained based on information such as an amplitude and a rate of change of the reaction curve.

Illustratively, in a complete reaction detection period of a sample, one reaction cup and the liquid in the reaction cup may pass through the detection device 120 several times with the rotation of the reaction disk. A respective signal sequence corresponding to each of a plurality of wavelengths in a light acquiring period may be obtained by acquiring signals whenever the reaction cup passing through the detection device 120, and a plurality of signal sequences corresponding to each of the plurality of wavelengths in a plurality of light acquiring periods may be obtained in response to the reaction cup passing through the detection device 120 several times. As the reaction process progresses, the light intensity of the optical signal in the signal sequence in different light acquiring periods changes, and the absorbance of the reaction cup and the liquid in the reaction cup also changes. A reaction curve corresponding to each wavelength may be determined based on the plurality of signal sequences corresponding to the wavelength in the plurality of light acquiring periods. Illustratively, a horizontal axis of the reaction curve may represent a dimension of the light acquiring period and a vertical axis may represent a dimension of the optical data such as the absorbance, and the horizontal axis and the vertical axis may also be swapped with each other.

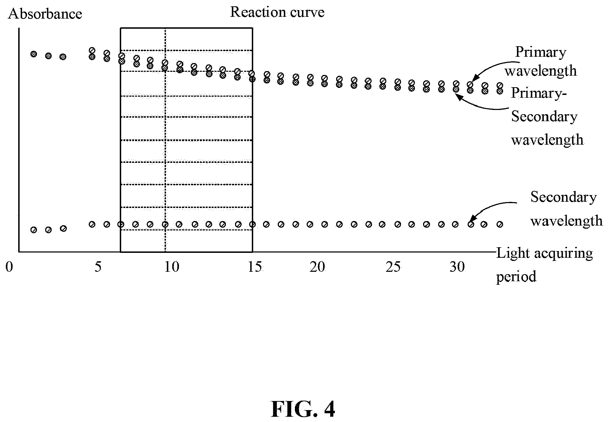

Illustratively, with reference to FIG. 4, for the signal sequence corresponding to each wavelength in each light acquiring period for the at least one type of emitting light such as the transmitted light, a single-point absorbance corresponding to each wavelength in the light acquiring period is calculated by interpolation algorithm. Compared with acquiring the light intensity of the optical signal once for a respective wavelength in each light acquiring period and determining the corresponding absorbance, the determination of the absorbance based on the signal sequence in each light acquiring period can improve the accuracy of the absorbance obtained in the light acquiring period. A respective reaction curve corresponding to each wavelength may be determined based on the single-point absorbances corresponding to the wavelength in a plurality of light acquiring periods, which is not limited thereto. For example, a plurality of absorbances may be calculated for each signal sequence. That is, a plurality of absorbances correspond to each wavelength in each light acquiring period, and the reaction curve corresponding to each wavelength may also be determined based on the plurality of absorbances corresponding to the wavelength in the light acquiring period.

In some implementations, with reference to FIG. 4, the detection result of the sample to be detected may be determined based on reaction curves corresponding to one or two wavelengths.

For example, one of the wavelengths may be preset as a primary wavelength and the other may be preset as a secondary wavelength. The detection result of the sample to be detected may be determined based on the reaction curve corresponding to the primary wavelength or the reaction curve corresponding to the secondary wavelength. For example, a reactivity may be obtained based on the reaction curve corresponding to the primary wavelength or the reaction curve corresponding to the secondary wavelength, and a concentration result corresponding to the sample to be detected may be calculated by using the reactivity in combination with a calibration parameter.

Optionally, spectral intensities in different wavebands are different from each other for different detection items, so a suitable waveband may be selected for detecting this detection item, and such waveband may be called the primary wavelength. In order to eliminate some interference, an additional waveband may be selected as an auxiliary waveband, which may be called the secondary wavelength.

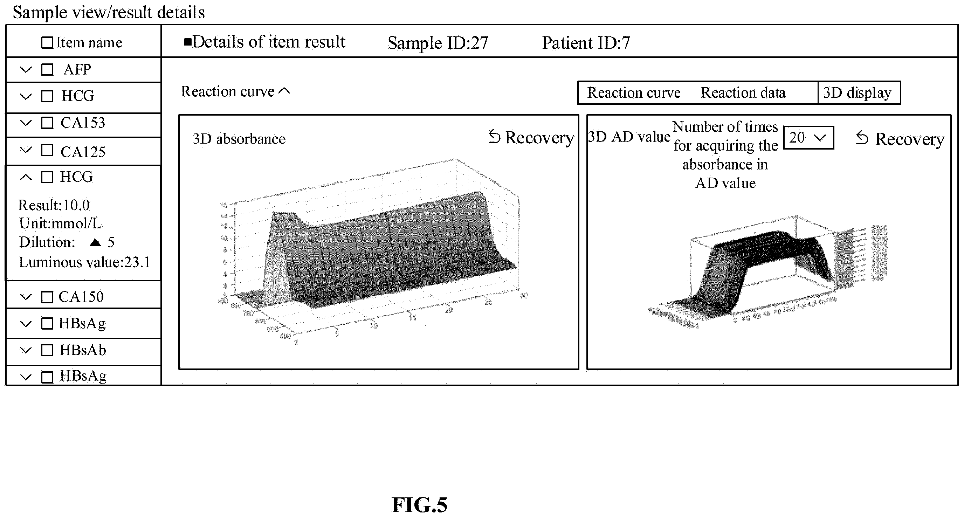

Illustratively, as illustrated in FIG. 5, the display 140 may display a detection result, such as Creatine Kinase (CK) concentration, corresponding to the sample to be detected. The reaction curve may also be displayed, for example, the reaction curve corresponding to the primary wavelength and the reaction curve corresponding to the secondary wavelength are displayed as illustrated in FIG. 4. Optionally, a difference curve between the reaction curve corresponding to the primary wavelength and the reaction curve corresponding to the secondary wavelength may also be displayed.

In an embodiment of the disclosure, the display 140 is configured to display the optical data corresponding to the detection wavelength and the at least one wavelength other than the detection wavelength in the plurality of light acquiring periods for the at least one type of emitting light. In an example, the display 140 may be configured to display, for the at least one type of emitting light, optical data corresponding to at least three wavelengths (the primary wavelength, the secondary wavelength and at least one wavelength other than the primary wavelength and the secondary wavelength; or the primary wavelength and at least two wavelengths other than the primary wavelength) in the plurality of the light acquiring periods.

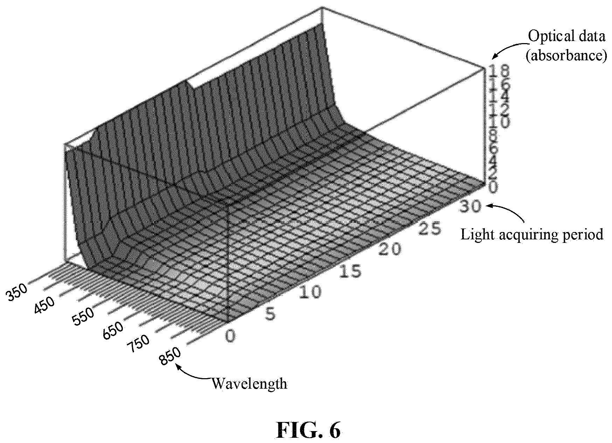

In an implementation, the display is configured to: display the optical data corresponding to the detection wavelength and the at least one wavelength other than the detection wavelength in the plurality of light acquiring periods for the transmitted light, for example, displaying the absorbances corresponding to a plurality of wavelengths in a plurality of light acquiring periods for the transmitted light, as illustrated in FIG. 6. The display is configured to: display, for the scattered light, the optical data corresponding to the detection wavelength in the plurality of light acquiring periods or display, for the scattered light, the optical data corresponding to the at least one wavelength other than the detection wavelength in the plurality of light acquiring periods.

In other implementations, the display is configured to: display, for the scattered light, the optical data corresponding to the detection wavelength and the at least one wavelength other than the detection wavelength in the plurality of light acquiring periods; and display, for the transmitted light, the optical data corresponding to the detection wavelength in the plurality of light acquiring periods or display, for the transmitted light, the optical data corresponding to the at least one wavelength other than the detection wavelength in the plurality of light acquiring periods.

In the embodiments of the disclosure, the optical data corresponding to the detection wavelength and the at least one wavelength other than the detection wavelength in the plurality of light acquiring periods for at least one type of emitting light are displayed, thereby providing the user with richer information obtained in the detection process of the sample analyzer, for example, abnormal data that cannot be demonstrated on the reaction curve corresponding to the detection wavelength can be more intuitively observed by the user. For example, the optical data corresponding to the detection wavelength and the at least one wavelength other than the detection wavelength in the plurality of light acquiring periods is analyzed, the interference in the detection process can be determined based on the abnormal data in the optical data by the user, to realize a more sufficient review on the detection results and to prevent wrong and unreasonable results; it further facilitates troubleshooting or academic research.

In some implementations, the display is configured to display optical data corresponding to at least two different types of emitting lights in different display regions on the display. A type identifier, such as a text identifier, for indicating the type of the emitting light may also be displayed in the corresponding display region, to allow the user to distinguish the optical data corresponding to different types of emitting lights.

In some implementations, the processor is further configured to determine a target type of emitting light among the plurality of types of emitting lights based on a type determination operation by a user and/or a preset type determination rule. The display is further configured to display the optical data corresponding to the target type of emitting light. There may be one or more target types. For example, in case that the target type of emitting light includes the transmitted light, the optical data corresponding to the detection wavelength and the at least one wavelength other than the detection wavelength in the plurality of light acquiring periods for the transmitted light is only displayed on the display. Illustratively, the target type of emitting light may be determined based on factors such as a structure of the sample analyzer, a detection item, a sample type, and a user requirement, so as to facilitate analysis by the user based on the displayed optical data corresponding to the target type of emitting light.

Illustratively, the type determination operation includes an operation of switching the target type in a type switching control displayed on the display. For example, the type switching control may be displayed in at least one of a setting interface of the sample analyzer, a display interface of the optical data, or another display interface, to enable the user to set the target type of emitting light flexibly.

Illustratively, the type determination operation includes an operation of selecting, by the user, optical data corresponding to the target type of emitting light among optical data corresponding to the plurality of types of emitting lights displayed on the display when the display displays the optical data corresponding to the plurality of types of emitting lights. For example, the optical data corresponding to the plurality of types of emitting lights, such as the transmitted light, reflected light and scattered light, may be displayed on the display by default, to allow the user to comprehensively analyze a plurality of types of optical data. When the optical data corresponding to the target type of emitting light needs to be analyzed, the optical data corresponding to the target type of emitting light may be selected among the optical data corresponding to the plurality of types of emitting lights by clicking or other operations. The display may then only display the optical data corresponding to the target type of emitting light, and other types of optical data may not be displayed.

Illustratively, when determining the target type of emitting light among the plurality of types of emitting lights based on the type determination rule, the processor is configured to: in response to an abnormality in optical data corresponding to at least one type of emitting light among the plurality of types of emitting lights being identified, determine the at least one type of emitting light with the abnormality as the target type of emitting light, so as to facilitate the user to analyze the optical data corresponding to the emitting light with the abnormality.

In some implementations, the display 140, when displaying the optical data corresponding to the detection wavelength and the at least one wavelength other than the detection wavelength in the plurality of light acquiring periods for the at least one type of emitting light, is configured to: display the detection result of the sample to be detected on a preset display interface, and display, on the preset display interface, the optical data corresponding to the detection wavelength and the at least one wavelength other than the detection wavelength in the plurality of light acquiring periods.

With reference to FIG. 5, the detection result of the sample to be detected, such as the CK concentration, is displayed in a list on the left side of the preset display interface, and the optical data corresponding to at least three wavelengths in the plurality of light acquiring periods for the at least one type of emitting light is displayed in a region on the right side of the preset display interface, for example, the optical data for the transmitted light is displayed on a 3D absorbance graph.

Illustratively, when displaying, for the at least one type of emitting light, the optical data corresponding to the detection wavelength and the at least one wavelength other than the detection wavelength in the plurality of light acquiring periods, the display 140 is further configured to display, on a first display interface, the detection result of the sample to be detected; and to display, on a second display interface, the optical data corresponding to the detection wavelength and the at least one wavelength other than the detection wavelength in the plurality of light acquiring periods, based on a detail viewing operation by a user on the detection result. Optionally, when the user clicks on at least one of a plurality of detection results, the optical data corresponding to the at least one detection result is displayed. For example, the user may click a certain detection result when the detection result exceeds a preset range, to trigger the preset display interface to display the optical data corresponding to the detection result, which is convenient for the user to conduct troubleshooting.

Illustratively, when displaying, for the at least one type of emitting light, the optical data corresponding to the detection wavelength and the at least one wavelength other than the detection wavelength in the plurality of light acquiring periods, the display is configured to: display the detection result of the sample to be detected on the first display interface; and switching, based on a display switching operation by the user, between a display of the reaction curve and a display of the optical data corresponding to the detection wavelength and the at least one wavelength other than the detection wavelength in the plurality of light acquiring periods on the second display interface; and/or switching, based on a display switching operation of the user, a display mode for displaying the optical data corresponding to the detection wavelength and the at least one wavelength other than the detection wavelength in the plurality of light acquiring periods on the second display interface.

For example, for the at least one type of emitting light, the display may be switched, based on the display switching operation of the user, between displaying the optical data corresponding to the detection wavelength and the at least one wavelength other than the detection wavelength in the plurality of light acquiring periods and displaying the reaction curve corresponding to at least one wavelength (such as the primary wavelength and/or the secondary wavelength). With reference to FIG. 5, for example, when the user selects a virtual key of reaction curve, the reaction curve is displayed on the preset display interface by the display 140. When the user selects a virtual key of 3D display, the display 140 displays the optical data corresponding to the detection wavelength and at least one wavelength other than the detection wavelength in the plurality of light acquiring periods on the preset display interface in a 3D manner. When the user selects a virtual key of reaction data, the display 140 displays the optical data corresponding to the detection wavelength and at least one wavelength other than the detection wavelength in the plurality of light acquiring periods on the preset display interface in a form of a table or a plurality of 2D graphs. The display mode for displaying the reaction curve or the optical data may be switched based on the requirement of the user, to allow the user to review and check the detection results or conduct troubleshooting.

In some implementations, referring to FIG. 6 in conjunction with FIG. 5, the display 140, when displaying the optical data corresponding to the detection wavelength and the at least one wavelength other than the detection wavelength in the plurality of light acquiring periods for the at least one type of emitting light, is configured to: display, on a first 3D curved surface, the optical data corresponding to the detection wavelength and the at least one wavelength other than the detection wavelength in the plurality of light acquiring periods for the at least one type of emitting light. Three dimensions of the first 3D curved surface are a dimension of a light acquiring period, a dimension of a wavelength, and a dimension of optical data (such as the absorbance), respectively. Optionally, the display may display the first 3D curved surface of the optical data corresponding to a respective type of emitting light in a respective display region.

FIG. 6 is a schematic diagram illustrating a first 3D curved surface for the transmitted light in which the optical data is the absorbance. The first 3D curved surface may be referred to as an absorbance 3D graph or a 3D absorbance graph. The first 3D curved surface may display, in a form of 3D absorbance, the optical data corresponding to the detection wavelength and the at least one wavelength other than the detection wavelength in the plurality of light acquiring periods.

Illustratively, the detection wavelength may include a primary wavelength and may also include a secondary wavelength. For example, the primary wavelength is 550 nm and the secondary wavelength is 750 nm, which is not limited thereto. Illustratively, in addition to displaying the optical data corresponding to the detection wavelength in the plurality of light acquiring periods, the optical data corresponding to at least one wavelength other than the detection wavelength in the plurality of light acquiring periods may also be displayed. Optionally, optical data corresponding to all wavelengths, supported by the detection device 120, in the plurality of light acquiring periods may be displayed, or optical data corresponding to partial wavelengths may be displayed, for example, optical data corresponding to wavelengths near the primary wavelength and the secondary wavelength may be displayed.

Illustratively, as illustrated in FIG. 6, a height of an area, corresponding to the light acquiring period and the wavelength, in the dimension of the optical data in the first 3D curved surface is positively correlated with a value of the optical data corresponding to the light acquiring period and the wavelength. For example, each area on the first 3D curved surface represents the absorbance corresponding to the respective wavelength at the respective light acquiring period corresponding to the area. For example, whether there is an interference in the detection process may be determined based on the respective height of each area and/or a change in the heights of a plurality of areas on the first 3D curved surface.

Illustratively, as illustrated in FIG. 6, the first 3D curved surface is divided into different regions in the first 3D curved surface by respective wavelengths in the dimension of wavelength, and the different regions corresponding to different wavelengths have different colours. By way of example, it may be convenient for a user to distinguish optical data corresponding to different wavelengths based on the colours of the regions on the first 3D curved surface.

Optionally, the processor 130 is further configured to detect an operation by the user on the view, and the display 140 is further configured to, in response to the operation by the user on the view being detected by the processor 130, perform at least one of: rotating, scaling, or restoring to a preset angle and size, on the first 3D curved surface. It is convenient for the user to view the displayed optical data from different perspectives and analyze the optical data by rotating and scaling the first 3D curved surface. As illustrated in FIG. 5, a recovery button is displayed when displaying the first 3D curved surface such as the 3D absorbance graph, and the first 3D curved surface is restored to a preset angle and size when the user clicks the recovery button. The preset angle and size are, for example, an optimum viewing angle, which facilitates the user to analyze the optical data.

In other implementations, the display 140, when displaying the optical data corresponding to the detection wavelength and at least one wavelength other than the detection wavelength in the plurality of light acquiring periods for the at least one type of emitting light, is configured to: display, in a table, the optical data corresponding to the detection wavelength and the at least one wavelength other than the detection wavelength in the plurality of light acquiring periods. Each row of the table includes optical data corresponding to a respective wavelength in the plurality of light acquiring periods, and each column of the table includes optical data corresponding to the detection wavelength and the at least one wavelength other than the detection wavelength in a respective light acquiring period; or each column of the table includes optical data corresponding to a respective wavelength in the plurality of light acquiring periods, and each row of the table includes optical data corresponding to the detection wavelength and the at least one wavelength other than the detection wavelength in a respective light acquiring period. The optical data, corresponding to the detection wavelength and the at least one wavelength other than the detection wavelength in the plurality of light acquiring periods for the at least one type of emitting light, may be analyzed by the user based on the table.

In other implementations, the display 140, when displaying the optical data corresponding to the detection wavelength and at least one wavelength other than the detection wavelength in the plurality of light acquiring periods for the at least one type of emitting light, is configured to: display, on a plurality of first 2D curves, the optical data corresponding to the detection wavelength and the at least one wavelength other than the detection wavelength in the plurality of light acquiring periods for the at least one type of emitting light. Different first 2D curves are used for respectively displaying optical data corresponding to different wavelengths in the plurality of light acquiring periods, or different first 2D curves are used for respectively displaying optical data corresponding to the detection wavelength and the at least one wavelength other than the detection wavelength in different light acquiring periods. For example, in each first 2D curve corresponding to a respective wavelength, a horizontal axis may represent a dimension of the light acquiring period and a vertical axis may represent a dimension of the absorbance, and the optical data corresponding to the wavelength in the plurality of light acquiring periods is displayed by means of a curve.

For example, the plurality of first 2D curves may be displayed frame by frame automatically or manually in a form of slices, to display the optical data corresponding to the detection wavelength and the at least one wavelength other than the detection wavelength in the plurality of light acquiring periods.

In some implementations, the processor 130 is further configured to identify whether an abnormality occurs in the optical data corresponding to the detection wavelength and the at least one wavelength other than the detection wavelength in the plurality of light acquiring periods for the at least one type of emitting light. The display 140 is further configured to, in response to the abnormality in the optical data being identified by the processor 130, prompt first prompt information for: a light acquiring period and/or a wavelength and/or a type of emitting light corresponding to the optical data with the abnormality; and/or a cause of the abnormality.

For example, some abnormal substances in the sample to be detected or some factors in the environment (such as bubbles in the liquid in the reaction cup, or the reaction cup being polluted or damaged or discolored) may interfere with the reaction process and/or the detection process. These interferences may affect certain types of emitting lights or optical signals corresponding to certain wavelengths in some light acquiring periods, resulting in the abnormal optical data and the final result deviating from the actual situation. The first prompt information is used for prompting the light acquiring period and/or the wavelength and/or the type of emitting light corresponding to the abnormal optical data; and/or for prompting the cause corresponding to the abnormality, which can facilitate the user to perform reviewing, troubleshooting or analysis.

Illustratively, for the transmitted light, for example, the presence of the abnormality may be determined when a change trend of the absorbance corresponding to at least one wavelength in a plurality of light acquiring periods is different from a preset trend, such as an abnormal uplift in the change trend. Alternatively, the change trends of the absorbances corresponding to different wavelengths in the plurality of light acquiring periods may be compared, and the presence of the abnormality may be determined when the change trends corresponding to different wavelengths are quite different, which is not limited thereto. For example, the presence of the abnormality may be determined by comparing the absorbances corresponding to different wavelengths in one or more light acquiring periods.

Illustratively, the processor 130, when calculating optical data corresponding to each wavelength based on a signal sequence corresponding to the wavelength in the light acquiring period, is configured to determine whether the optical data, such as the absorbance, corresponding to the wavelength in the light acquiring period is abnormal based on the signal sequence. For example, one signal sequence is obtained by acquiring a plurality of signals for the reaction cup in each light acquiring period, and when there is an abnormal interference such as bubbles in the reaction cup or the liquid in the reaction cup, it is indicated that some of the optical signals in the signal sequence are acquired when the optical signal acquisition component 122 is aligned with the position of the abnormal interference. An actual state of the reaction cup and of the liquid in the reaction cup may be determined based on the signal sequence, i.e., there is an abnormality.

Illustratively, the display 140, when displaying the first prompt information, is configured to display a display region corresponding to the optical data with the abnormality with a preset display parameter when displaying the optical data corresponding to the detection wavelength and the at least one wavelength other than the detection wavelength in the plurality of light acquiring periods for the at least one type of emitting light. For example, an area corresponding to an abnormal wavelength and/or an abnormal light acquiring period may be highlighted by means of color deepening, line thickening, transparency changing, or the like on the first 3D curved surface corresponding to the transmitted light as illustrated in FIG. 6, which is not limited thereto.

Illustratively, the display 140, when displaying the first prompt information, is configured to display the first prompt information in a text form when displaying the optical data corresponding to the detection wavelength and the at least one wavelength other than the detection wavelength in the plurality of light acquiring periods for the at least one type of emitting light. The first prompt information in the text form includes at least one of: the light acquiring period, the wavelength or the type of emitting light corresponding to the optical data with the abnormality. For example, the first prompt information in the text form includes "Please pay attention to abnormality in wavelength A at light acquiring period B".

Illustratively, the display 140, when displaying the first prompt information, is configured to display the cause of the abnormality in at least one of a text, an image or an animation form. For example, the display may display the text "please pay attention to abnormality in wavelength A at light acquiring period B, there may be interference C". For example, a static or dynamic biochemical detection process may be drawn on a software interface of the display 140, to illustrate a beam of light passing through a cup with liquid therein. If the cause corresponding to the identified abnormality is bubbles in the liquid, some bubbles may be drawn in the cup in the form of an image or animation. A type of the abnormality can be displayed more intuitively by drawing morphological changes of the cup, the beam and the like.

Optionally, a plurality of pieces of first prompt information may be displayed in combination. For example, the area corresponding to the abnormal wavelength and/or the abnormal light acquiring period and/or the abnormal type of emitting light may be highlighted and accompanied with a text description.

In some implementations, the processor 130 is configured to calculate the optical data corresponding to each of the detection wavelength and the at least one wavelength other than the detection wavelength in each of the plurality of light acquiring periods based on the respective signal sequence corresponding to the respective wavelength acquired in the light acquiring period for the at least one type of emitting light.

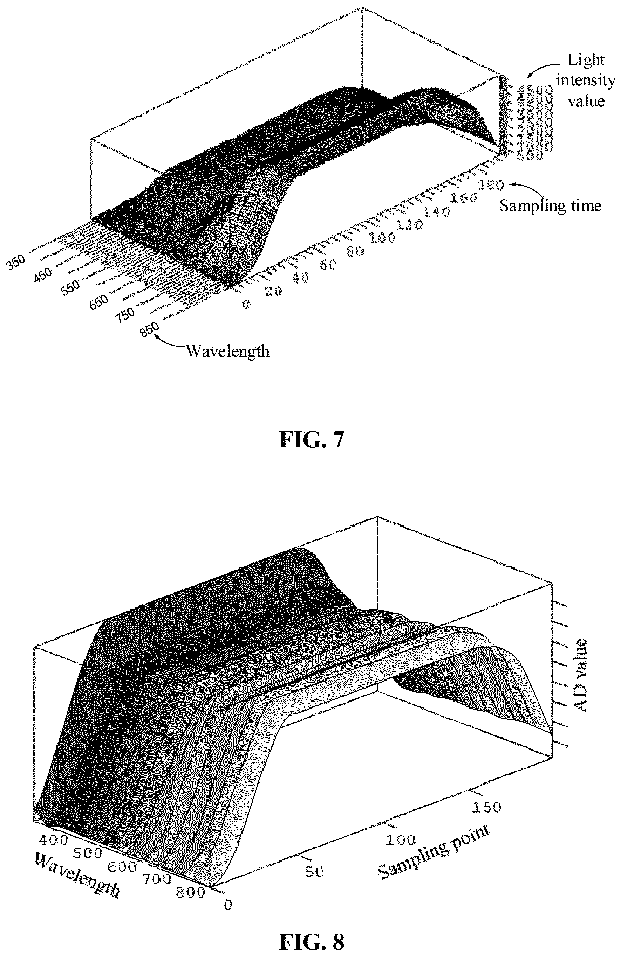

Optionally, referring to FIG. 7 in conjunction with FIG. 5, display 140 is further configured to display signal sequences respectively corresponding to the detection wavelength and the at least one wavelength other than the detection wavelength in at least one of the plurality of light acquiring periods for the at least one type of emitting light, such as the target type of emitting light. For example, the signal sequences respectively corresponding to the detection wavelength and the at least one wavelength other than the detection wavelength in one light acquiring period for the at least one type of emitting light may be displayed in a form of a 3D AD value.

In some implementations, the display 140, when displaying the signal sequences respectively corresponding to the detection wavelength and the at least one wavelength other than the detection wavelength in the at least one of the plurality of light acquiring periods for the at least one type of emitting light, is configured to: display the detection result of the sample to be detected on a preset display interface, and display, on the preset display interface, the signal sequences respectively corresponding to the detection wavelength and the at least one wavelength other than the detection wavelength in the plurality of light acquiring periods for the at least one type of emitting light. With reference to FIG. 5, the detection result of the sample to be detected, such as the CK concentration, is displayed on the left side of the preset display interface, and the signal sequences respectively corresponding to the detection wavelength and the at least one wavelength other than the detection wavelength in the at least one of the plurality of light acquiring periods are displayed on the right side of the preset display interface.

Illustratively, when the detection result of the sample to be detected is displayed on the preset display interface, the signal sequences respectively corresponding to the detection wavelength and the at least one wavelength other than the detection wavelength in the at least one of the plurality of light acquiring periods may be displayed on the preset display interface, based on a detail viewing operation by the user on the detection result. Optionally, when the user clicks on at least one of a plurality of detection results, the signal sequence corresponding to the at least one detection result is displayed. For example, the user may click a certain detection result when the detection result exceeds a preset range, to trigger the preset display interface to display the signal sequence corresponding to the detection result, which is convenient for the user to conduct troubleshooting.

In some implementations, the display is configured to: display signal sequences corresponding to a plurality of wavelengths in at least one of the plurality of light acquiring periods for at least one type of emitting light, such as a target type of emitting light.

Illustratively, the plurality of wavelengths includes a detection wavelength and at least one wavelength other than the detection wavelength, and the detection wavelength includes a primary wavelength, or a primary wavelength and a secondary wavelength.

Illustratively, with reference to FIG. 7, the display 140, when displaying the signal sequences respectively corresponding to the detection wavelength and the at least one wavelength other than the detection wavelength in the at least one of the plurality of light acquiring periods for the target type of emitting light, is configured to: display, on a second 3D curved surface, signal sequences respectively corresponding to the detection wavelength and the at least one wavelength other than the detection wavelength in a target light acquiring period. Three dimensions of the second 3D curved surface are a dimension of time for sampling a plurality of optical signals in each signal sequence in the target light acquiring period, a dimension of wavelength, and a dimension of light intensity of each optical signal, respectively. Optionally, the second 3D curved surface may be referred to as a 3D AD value graph or an AD value 3D graph.

Optionally, the target light acquiring period is a light acquiring period selected by a user or a light acquiring period in which an abnormal light signal exists.

FIG. 7 illustrates a signal sequence corresponding to each of a plurality of wavelengths in a light acquiring period, and the signal sequence corresponding to the wavelength includes, for example, light intensities of two hundreds optical signals continuously sampled. As illustrated in FIG. 7, a signal sequence corresponding to at least one wavelength in a light acquiring period includes a rising edge signal sub-sequence, a reaction cup signal sub-sequence, and a falling edge signal sub-sequence. Illustratively, when the reaction cup is moved relative to the detection device 120, the optical signal acquisition component 122 of the detection device 120 firstly acquires an optical signal at one side of a cup wall of the reaction cup, and the acquired optical signal may be called the rising edge signal sub-sequence. Then, the optical signal acquisition component 122 acquires an optical signal from an illuminating surface of the reaction cup and the liquid in the reaction cup, and the acquired optical signal may be called the reaction cup signal sub-sequence. Generally, a light intensity of the optical signal in the reaction cup signal sub-sequence may have a relatively stable value. As the reaction cup continues to move relative to the detection device 120, the optical signal acquisition component 122 acquires a signal at another side of the cup wall of the reaction cup, and the acquired signal may be called the falling edge signal sub-sequence. Optionally, the light intensities and sampling times of a part or all of the rising edge signal sub-sequence, the reaction cup signal sub-sequence, and the falling edge signal sub-sequence may be displayed.

Illustratively, as illustrated in FIG. 7, a height of an area, corresponding to the sampling time and the wavelength, in the dimension of the light intensity in the second 3D curved surface is positively correlated with the light intensity of the optical signal corresponding to the sampling time and the wavelength. For example, each area on the second 3D curved surface represents the light intensity of the optical signal, corresponding to the wavelength, acquired in the sampling time corresponding to the area. For example, whether there is an interference in the detection process may be determined based on the respective height of each area and/or a change in the heights of a plurality of areas on the second 3D curved surface.

Optionally, as illustrated in FIG. 7, the second 3D curved surface is divided into different regions in the second 3D curved surface by respective wavelengths in the dimension of wavelength, and the different regions corresponding to different wavelengths have different colours. By way of example, it may be convenient for a user to distinguish the light intensities of the optical signals corresponding to different wavelengths based on the colours of the regions on the second 3D curved surface.

Optionally, the processor 130 is further configured to detect an operation by a user on the view, and the display 140 is further configured to, in response to the operation by the user on the view being detected by the processor 130, perform at least one of: rotating, scaling, or restoring to a preset angle and size, on the second 3D curved surface.

In other implementations, the display 140, when displaying, for the at least one type of emitting light, the signal sequences respectively corresponding to the detection wavelength and the at least one wavelength other than the detection wavelength in the at least one of the plurality of light acquiring periods, is configured to: display, in a plurality of second 2D curves, the signal sequences respectively corresponding to the detection wavelength and the at least one wavelength other than the detection wavelength in the at least one of the plurality of light acquiring periods. Different second 2D curves are used for respectively displaying signal sequences corresponding to different wavelengths in the at least one of the plurality of light acquiring periods. For example, a horizontal axis of the respective second 2D curve corresponding to each wavelength represents a dimension of a sampling time, and a vertical axis represents a dimension of a light intensity. The light intensities of the optical signals, corresponding to the wavelength, acquired at a plurality of sampling times are displayed by means of a curve. For example, the plurality of second 2D curves may be displayed frame by frame automatically or manually in a form of slices, to display the signal sequences corresponding to different wavelengths in the light acquiring period.

In some implementations, the processor 130 is further configured to determine a target light acquiring period among the plurality of light acquiring periods based on a period determination operation by a user and/or a preset period determination rule. The display 140 is further configured to display the signal sequences respectively corresponding to the detection wavelength and the at least one wavelength other than the detection wavelength in the target light acquiring period.

Illustratively, the software interface of the display 140 may support displaying AD value 3D graphs for all light acquiring periods. Because the optical signal in the signal sequence includes a dimension of a light acquiring period in addition to a dimension of the sampling time, a dimension of the wavelength and a dimension of the light intensity of the optical signal, the AD value 3D graph of the light acquiring period to be displayed may also be determined, and the light acquiring period may be referred to as the target light acquiring period.

For example, the period determination operation includes an operation of selecting the target light acquiring period in a preset selection control displayed on the display 140. Referring to FIG. 5, the user may select the twentieth light acquiring period as the target light acquiring period by setting the "Number of times for acquiring the absorbance in AD value" in the preset selection control to twenty.

For example, the period determination operation includes an operation of selecting, by the user, the target light acquiring period among the plurality of light acquiring periods displayed on the display 140 when the display 140 displays the optical data corresponding to the detection wavelength and the at least one wavelength other than the detection wavelength in the plurality of light acquiring periods. With reference to FIG. 5, the user may select a light acquiring period in the 3D absorbance graph as the target light acquiring period. For example, when it is determined that a 3D AD value of one of the light acquiring periods needs to be analyzed based on the 3D absorbance graph, the light acquiring period is determined as the target light acquiring period.

For example, the processor 130, when determining the target light acquiring period among the plurality of light acquiring periods based on the preset period determination rule, is configured to: in response to an abnormality in optical data and/or a signal sequence corresponding to at least one wavelength in a light acquiring period being identified, determine the light acquiring period in which the abnormality is identified as the target light acquiring period. It is convenient for the user to analyze the signal sequence corresponding to the light acquiring period in which the abnormality is identified.

In other implementations, the display 140 is configured to display signal sequences corresponding to at least one wavelength in a plurality of light acquiring periods for at least one type of emitting light. The at least one wavelength is selected from the detection wavelength and the at least one wavelength other than the detection wavelength, and the detection wavelength includes a primary wavelength, or a primary wavelength and a secondary wavelength.

Illustratively, the display 140, when displaying, for the at least one type of emitting light, the signal sequences corresponding to the at least one wavelength in the plurality of light acquiring periods, is configured to display, on a third 3D curved surface, signal sequences corresponding to a target wavelength in the plurality of light acquiring periods. Three dimensions of the third 3D curved surface are a dimension of time for sampling a plurality of optical signals in each signal sequence in each light acquiring period, a dimension of light acquiring period, and a dimension of light intensity of the optical signal. Optionally, the target wavelength is a wavelength selected by the user or a wavelength corresponding to an abnormal light signal.

Illustratively, a height of an area, corresponding to the sampling time and the wavelength, in the dimension of the light intensity in the third 3D curved surface is positively correlated with the light intensity of the optical signal corresponding to the sampling time and the wavelength. For example, whether there is an interference in the detection process may be determined based on the respective height of each area and/or a change in the heights of a plurality of areas on the third 3D curved surface.

Optionally, the colours of the third 3D curved surfaces are different for different target wavelengths. By way of example, it may be convenient for a user to distinguish the light intensities of light signals corresponding to different wavelengths based on the colours of the third 3D curved surfaces.

Optionally, the processor 130 is further configured to detect an operation by a user on the view, and the display 140 is further configured to, in response to the operation by the user on the view being detected by the processor 130, perform at least one of: rotating, scaling, or restoring to a preset angle and size, on the third 3D curved surface.

Illustratively, the display 140, when displaying, for the at least one type of emitting light, the signal sequences corresponding to the at least one wavelength in the plurality of light acquiring periods, is configured to: display, in at least one third 2D curve, the signal sequences corresponding to the at least one wavelength in the plurality of light acquiring periods. Different third 2D curves are used for displaying signal sequences corresponding to the at least one wavelength in different light acquiring periods, respectively. For example, a horizontal axis of the respective third 2D curve corresponding to each light acquiring period represents a dimension of a sampling time in the light acquiring period, and a vertical axis represents a dimension of a light intensity. The light intensities of the optical signals acquired at a plurality of sampling times in the light acquiring period are displayed by means of a curve. For example, the plurality of third 2D curves may be displayed frame by frame automatically or manually in a form of slices, to display the signal sequences corresponding to different light acquiring periods.

Illustratively, the processor 130 is further configured to determine a target wavelength among the detection wavelength and the at least one wavelength other than the detection wavelength based on a wavelength determination operation by a user and/or a preset wavelength determination rule. The display 140 is further configured to display signal sequences corresponding to the target wavelength in a plurality of light acquiring periods.

In some implementations, the processor 130 is further configured to identify whether an abnormality occurs in the optical signals of the signal sequence corresponding to each of the detection wavelength and the at least one wavelength other than the detection wavelength in the at least one of the plurality of light acquiring periods for the at least one type of emitting light. The display 140 is further configured to, in response to the abnormality in the optical signals of the signal sequence being identified by the processor 130, prompt second prompt information for: sampling time and/or a wavelength and/or a type of emitting light corresponding to the optical signal(s) with the abnormality; and/or a cause of the abnormality.

Illustratively, whether the abnormality occurs in the optical signal of the signal sequences corresponding to one or more wavelengths may be determined based on at least one sub-sequence of the rising edge signal sub-sequence, the reaction cup signal sub-sequence or the falling edge signal sub-sequence in the signal sequences. For example, it is determined that the abnormality occurs in the optical signal of a sub-sequence in the signal sequence corresponding to at least one wavelength when a difference between the sub-sequence and a preset sub-sequence is large. Alternatively, change trends of optical signals in sub-sequences corresponding to a plurality of wavelengths are compared, and it is determined that the abnormality occurs in optical signals of the sub-sequences when the change trends of the optical signals in the sub-sequences corresponding to the plurality of wavelengths deviate from each other considerably.

Illustratively, the display 140, when displaying the second prompt information, may be configured to display a display region corresponding to the optical signal with the abnormality with a preset display parameter when displaying the signal sequences corresponding to the detection wavelength and the at least one wavelength other than the detection wavelength in the at least one of the plurality of light acquiring periods.

Illustratively, the display 140, when displaying the second prompt information, may be configured to display the second prompt information in a text form. The second prompt information in the text form includes: the sampling time and/or the wavelength corresponding to the optical signal with the abnormality

Illustratively, the display 140, when displaying the second prompt information, is configured to display the cause of the abnormality in at least one of a text, an image or an animation form.

Optionally, the second prompt information may be displayed in the same way as that of the first prompt information or may be displayed in a different way, which will not be elaborated herein again.

In some implementations, when displaying, for the at least one type of emitting light, the optical data corresponding to the detection wavelength and the at least one wavelength other than the detection wavelength in the plurality of light acquiring periods, the display 140 is further configured to: display, on a first region of a preset display interface, the optical data corresponding to the detection wavelength and the at least one wavelength other than the detection wavelength in the plurality of light acquiring periods; and display, on a second region of the preset display interface, the signal sequences respectively corresponding to the detection wavelength and the at least one wavelength other than the detection wavelength in the at least one of the plurality of light acquiring periods. As illustrated in FIG. 5, the optical data (e.g., absorbance) corresponding to the detection wavelength and the at least one wavelength other than the detection wavelength in the plurality of light acquiring periods is displayed in the left area of the preset display interface, and the signal sequences (e.g., AD value) respectively corresponding to the detection wavelength and the at least one wavelength other than the detection wavelength in the at least one of the plurality of light acquiring periods are displayed on the second region of the preset display interface. In this way, richer information obtained in the detection process of the sample analyzer may be provided to the user by displaying the optical data and the signal sequences on the preset display interface, which facilitates the user to review the detection results or conduct troubleshooting.

In some embodiments, referring to FIG. 7 or FIG. 8, when displaying the signal sequence, a dimensional attribute of each dimension may be displayed, such as displaying the dimension of sampling time (sampling point), the dimension of wavelength, and the dimension of light intensity (AD value) in the three dimensions of the second 3D curved surface. In addition, values of the dimensions (e.g., the value of the wavelength, the AD value) may be displayed. Optionally, the dimensional attributes, the values of the dimensions, or both the dimensional attributes and the values of the dimensions may be displayed.

In some embodiments, referring to FIG. 6, when displaying the optical data, a dimensional attribute of each dimension may be displayed, such as displaying the dimension of light acquiring period, the dimension of wavelength, and the dimension of optical data in the three dimensions of the first 3D curved surface. In addition, values of the dimensions (e.g., the value of the wavelength, the value of absorbance) may be displayed. Optionally, the dimensional attributes, the values of the dimensions, or both the dimensional attributes and the values of the dimensions may be displayed.

The sample analyzer provided in the embodiments of the disclosure includes a reaction device, a detection device, a processor and a display. The reaction device is configured to provide a carrying component in which a reagent reacts with a sample to be detected to obtain a reaction product in the carrying component. The detection device at least includes a light source component and an optical signal acquisition component. The light source component is configured to generate an irradiation light, the irradiation light irradiates the reaction product carried by the carrying component and a plurality of types of emitting lights are emitted as a result of the irradiation. The plurality of types of emitting lights include a transmitted light, a reflected light and a scattered light. The optical signal acquisition component is configured to acquire, in each of a plurality of light acquiring periods, optical signals corresponding to a detection wavelength and at least one wavelength other than the detection wavelength for at least one type of emitting light among the plurality of types of emitting lights. The detection wavelength includes a primary wavelength, or a primary wavelength and a secondary wavelength. The processor is configured to, for the at least one type of emitting light, calculate optical data corresponding to the detection wavelength and the at least one wavelength other than the detection wavelength in each of the plurality of light acquiring periods based on the optical signals acquired in the light acquiring period. The display is configured to display the optical data corresponding to the detection wavelength and the at least one wavelength other than the detection wavelength in the plurality of light acquiring periods for the at least one type of emitting light. In this way, richer information obtained in the detection process of the sample analyzer may be provided to the user, which facilitates the user to review the detection results or conduct troubleshooting.

Illustratively, according to the embodiments of the disclosure, for at least one type of emitting light, optical data such as absorbances corresponding to the detection wavelength and the at least one wavelength other than the detection wavelength, in addition to a reactivity result, a concentration result and reaction curves of the primary wavelength and the secondary wavelength, may be displayed in a 3D form on a software interface of the sample analyzer such as a biochemical instrument, and/or light intensities such as AD values of the optical signals for calculating the optical data may be displayed. An abnormality arising from the interference in the sample or another factor may be analyzed from the optical data such as the absorbances corresponding to the detection wavelength and the at least one wavelength other than the detection wavelength, and/or the signal sequences respectively corresponding to the detection wavelength and the at least one wavelength other than the detection wavelength, so as to facilitate the user to find the abnormality in the result and prevent misdiagnosis and/or missed diagnosis.

Illustratively, in the embodiments of the disclosure, the signal sequence of the underlying optical signal is displayed, which facilitates the identification of the abnormality according to the characteristics of the light intensity of the underlying optical signal. For at least one type of emitting light, a full-waveband spectral viewing angle can be provided for the user by displaying the optical data such as the absorbances corresponding to the detection wavelength and the at least one wavelength other than the detection wavelength. It is convenient for the user to check the reaction curve by displaying the optical data such as the absorbances corresponding to the detection wavelength and the at least one wavelength other than the detection wavelength by means of the reaction curve. It is convenient for the user to check the reactivity result by displaying the reactivity result. It is convenient for the user to check whether the detection result is correct, such as in a preset linear range and/or reference range, by displaying the detection result such as the concentration result.

With reference to FIG. 1 in conjunction with the aforementioned embodiments, in another embodiment of the disclosure, the sample analyzer may not display the optical data, instead the sample analyzer may display the signal sequence corresponding to at least one wavelength in at least one light acquiring period for at least one type of emitting light, to provide richer information for the user, which is convenient for the user to review the detection results or conduct troubleshooting.

Specifically, the optical signal acquisition component 122 is configured to acquire, in at least one of the plurality of light acquiring periods, a signal sequence corresponding to at least one wavelength for at least one type of emitting light among the plurality of types of emitting lights. The signal sequence includes light intensities of a plurality of optical signals and time for sampling each of the plurality of optical signals.

The display 140 is configured to display the signal sequences corresponding to the at least one wavelength in the at least one of the plurality of light acquiring periods for the at least one type of emitting light.

In some implementations, the display is configured to: display signal sequences corresponding to a plurality of wavelengths in the at least one of the plurality of light acquiring periods for a target type of emitting light.

Illustratively, the at least one wavelength includes a detection wavelength and at least one wavelength other than the detection wavelength, and the detection wavelength includes a primary wavelength, or a primary wavelength and a secondary wavelength.

In some implementations, the display 140, when displaying the signal sequence corresponding to at least one wavelength in the at least one of the plurality of light acquiring periods, is configured to: display, on a second 3D curved surface, signal sequences respectively corresponding to the detection wavelength and the at least one wavelength other than the detection wavelength in a target light acquiring period. Three dimensions of the second 3D curved surface are a dimension of time for sampling a plurality of optical signals in each signal sequence in the target light acquiring period, a dimension of wavelength, and a dimension of light intensity of the optical signal.

Optionality, the target light acquiring period is a light acquiring period selected by a user or a light acquiring period in which an abnormal light signal exists.

Illustratively, a height of an area, corresponding to a sampling time and a wavelength, in the dimension of the light intensity in the second 3D curved surface is positively correlated with a light intensity of an optical signal corresponding to the sampling time and the wavelength.

Illustratively, the second 3D curved surface is divided into different regions in the second 3D curved surface by respective wavelengths in the dimension of wavelength, and the different regions corresponding to different wavelengths have different colours.

In some implementations, the display 140, when displaying the signal sequences corresponding to the plurality of wavelengths in the at least one of the plurality of light acquiring periods, is configured to display, in a plurality of second 2D curves, the signal sequences corresponding to the plurality of wavelengths in the at least one of the plurality of light acquiring periods. Different second 2D curves are used for displaying signal sequences corresponding to different wavelengths in the at least one of the plurality of light acquiring periods, respectively.

In other implementations, when displaying, for the at least one type of emitting light, the signal sequence corresponding to the at least one wavelength in at least one of the plurality of light acquiring periods, the display is configured to: display, on a third 3D curved surface, signal sequences corresponding to a target wavelength in the plurality of light acquiring periods. Three dimensions of the third 3D curved surface are a dimension of time for sampling a plurality of optical signals in each signal sequence in each light acquiring period, a dimension of light acquiring period, and a dimension of light intensity of the optical signal. Optionally, the target wavelength is a wavelength selected by the user or a wavelength corresponding to an abnormal light signal.

Illustratively, when displaying the signal sequence corresponding to the at least one wavelength in the plurality of light acquiring periods, the display is configured to: display, on at least one third 2D curve, the signal sequences corresponding to the at least one wavelength in the plurality of light acquiring periods. Different third 2D curves are used for displaying signal sequences corresponding to the at least one wavelength in different light acquiring periods, respectively.

The specific principle and implementations of the sample analyzer in the embodiment of the disclosure are similar to that of the sample analyzer in the aforementioned embodiments, and will not be elaborated herein again. The signal sequence of the underlying optical signals is displayed, and it is possible to facilitate the identification of anomalies based on the characteristics of the intensity of the underlying optical signals. Moreover, it is possible to provide the user with a full-wavelength spectral view by displaying, for the at least one type of emitting light, the optical data, such as the absorbance, corresponding to the detection wavelength and the at least one wavelength other than the detection wavelength.

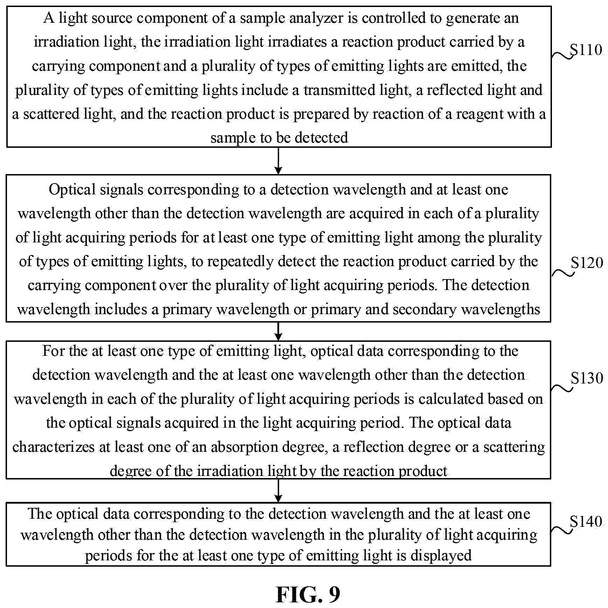

With reference to FIG. 9 in conjunction with the aforementioned embodiments, FIG. 9 is a flow diagram of a method for controlling a sample analyzer according to an embodiment of the disclosure.

As illustrated in FIG. 9, the method for controlling the sample analyzer includes the following operations S110 to S140.

In operation S110, a light source component of the sample analyzer is controlled to generate an irradiation light, the irradiation light irradiates a reaction product carried by a carrying component and a plurality of types of emitting lights are emitted as a result of the irradiation. The plurality of types of emitting lights include a transmitted light, a reflected light and a scattered light, and the reaction product is prepared by reaction of a reagent with a sample to be detected.

In operation S 120, optical signals corresponding to a detection wavelength and at least one wavelength other than the detection wavelength are acquired in each of a plurality of light acquiring periods for at least one type of emitting light among the plurality of types of emitting lights, to repeatedly detect the reaction product carried by the carrying component over the plurality of light acquiring periods. The detection wavelength includes a primary wavelength, or a primary wavelength and a secondary wavelength.

In operation S 130, for the at least one type of emitting light, optical data corresponding to the detection wavelength and the at least one wavelength other than the detection wavelength in each of the plurality of light acquiring periods is calculated based on the optical signals acquired in the light acquiring period. The optical data characterizes at least one of an absorption degree, a reflection degree or a scattering degree of the irradiation light by the reaction product.

In operation S 140, the optical data corresponding to the detection wavelength and the at least one wavelength other than the detection wavelength in the plurality of light acquiring periods for the at least one type of emitting light is displayed.

In some implementations, the optical data corresponding to the detection wavelength and the at least one wavelength other than the detection wavelength in the plurality of light acquiring periods for the transmitted light is displayed.

Additionally or alternatively, the optical data corresponding to the detection wavelength in the plurality of light acquiring periods for the scattered light is displayed, or the optical data corresponding to the at least one wavelength other than the detection wavelength in the plurality of light acquiring periods for the scattered light is displayed.

In some implementations, the operation of displaying the optical data corresponding to the detection wavelength and the at least one wavelength other than the detection wavelength in the plurality of light acquiring periods for the at least one type of emitting light includes the following action.

The optical data corresponding to the detection wavelength and the at least one wavelength other than the detection wavelength in the plurality of light acquiring periods for the at least one type of emitting light is displayed on a first 3D curved surface. Three dimensions of the first 3D curved surface are a dimension of light acquiring period, a dimension of wavelength, and a dimension of optical data, respectively.

In some implementations, the operation of calculating, for the at least one type of emitting light, the optical data corresponding to the detection wavelength and the at least one wavelength other than the detection wavelength in each of the plurality of light acquiring periods based on the optical signals acquired in the light acquiring period includes the following action.

Optical data corresponding to each wavelength in each of the plurality of light acquiring periods is calculated based on a signal sequence corresponding to the wavelength in the light acquiring period.

Illustratively, the method may further include the following operations.

Signal sequence respectively corresponding to the detection wavelength and the at least one wavelength other than the detection wavelength in at least one of the plurality of light acquiring periods are displayed for the at least one type of emitting light.

The specific principle and implementations of the method for controlling the sample analyzer in the embodiment of the disclosure are similar to that of the sample analyzer in the aforementioned embodiments, and will not be elaborated herein again.

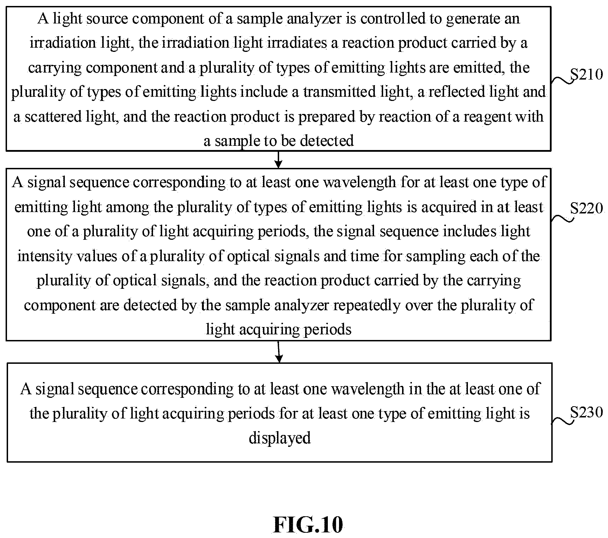

With reference to FIG. 10 in conjunction with the aforementioned embodiments, FIG. 10 is a flow diagram of a method for controlling a sample analyzer according to another embodiment of the disclosure.

As illustrated in FIG. 10, the method for controlling the sample analyzer includes the following operations S210 to S230.

In operation S210, a light source component of the sample analyzer is controlled to generate an irradiation light, the irradiation light irradiates a reaction product carried by a carrying component and a plurality of types of emitting lights are emitted as a result of the irradiation. The plurality of types of emitting lights include a transmitted light, a reflected light and a scattered light, and the reaction product is prepared by reaction of a reagent with a sample to be detected.

In operation S220, a signal sequence corresponding to at least one wavelength for at least one type of emitting light among the plurality of types of emitting lights is acquired in at least one of a plurality of light acquiring periods. The signal sequence includes light intensities of a plurality of optical signals and time for sampling each of the plurality of optical signals, and the reaction product carried by the carrying component are detected by the sample analyzer repeatedly over the plurality of light acquiring periods.

In operation S230, the signal sequence corresponding to the at least one wavelength in the at least one of the plurality of light acquiring periods for the at least one type of emitting light is displayed.

In some implementations, the at least one wavelength includes a detection wavelength and at least one wavelength other than the detection wavelength, and the detection wavelength includes a primary wavelength, or a primary wavelength and a secondary wavelength.

In some implementations, the operation of displaying the signal sequence corresponding to the at least one wavelength in the at least one of the plurality of light acquiring periods includes the following action.

Signal sequences respectively corresponding to the detection wavelength and the at least one wavelength other than the detection wavelength in a target light acquiring period are displayed on a second 3D curved surface. Three dimensions of the second 3D curved surface are a dimension of time for sampling a plurality of optical signals in each signal sequence in the target light acquiring period, a dimension of wavelength, and a dimension of light intensity of the optical signal. The target light acquiring period is a light acquiring period selected by a user or a light acquiring period in which an abnormal light signal exists.

The specific principle and implementations of the method for controlling the sample analyzer provided by the embodiment of the disclosure are similar to that of the sample analyzer in the aforementioned embodiments, and will not be elaborated herein again.

It should be understood that the terms used herein are solely for the purpose of describing specific embodiments and not intended to limit the disclosure.

It should be understood that the term "and/or" used in the specification of the disclosure and the appended claims refers to any combination and all possible combinations of one or more items in the listed items, including such combinations.

The foregoing descriptions are merely specific embodiments of the disclosure, and are not intended to limit the scope of protection of the disclosure. Any equivalent modification or replacement easily conceivable by a person skilled in the art within the technical scope disclosed in the disclosure shall fall within the scope of protection of the disclosure. Therefore, the scope of protection of the disclosure shall be subject to the scope of protection of the claims.

## Claims

1. A sample analyzer, comprising:
a reaction device, configured to provide a carrying component in which a reagent reacts with a sample to be detected to obtain a reaction product in the carrying component;
a detection device, configured to repeatedly detect the reaction product carried by the carrying component over a plurality of light acquiring periods, wherein the detection device at least comprises a light source component and an optical signal acquisition component, the light source component is configured to generate an irradiation light, the irradiation light irradiates the reaction product carried by the carrying component and a plurality of types of emitting lights are emitted as a result of said irradiation, and the plurality of types of emitting lights comprise a transmitted light, a reflected light and a scattered light;
wherein the optical signal acquisition component is configured to acquire, in each of the plurality of light acquiring periods, optical signals, corresponding to a detection wavelength and at least one wavelength other than the detection wavelength, for at least one type of emitting light among the plurality of types of emitting lights, wherein the detection wavelength comprises a primary wavelength, or a primary wavelength and a secondary wavelength;
a processor, configured to calculate, for the at least one type of emitting light, optical data corresponding to the detection wavelength and the at least one wavelength other than the detection wavelength in each of the plurality of light acquiring periods based on the optical signals acquired in said light acquiring period, the optical data characterizing at least one of an absorption degree, a reflection degree and a scattering degree of the irradiation light by the reaction product; and
a display, configured to display, for the at least one type of emitting light, the optical data corresponding to the detection wavelength and the at least one wavelength other than the detection wavelength in the plurality of light acquiring periods.

2. The sample analyzer of claim 1, wherein the processor is further configured to determine a target type of emitting light among the plurality of types of emitting lights based on at least one of a type determination operation by a user and a preset type determination rule; and
the display is further configured to display optical data corresponding to the target type of emitting light;
wherein, when determining the target type of emitting light among the plurality of types of emitting lights based on the type determination rule, the processor is further configured to:
in response to identifying an abnormality in optical data corresponding to at least one type of emitting light among the plurality of types of emitting lights, determine the at least one type of emitting light with the abnormality as the target type of emitting light.

3. The sample analyzer of claim 1 or 2, wherein the display is further configured to display, in different display regions, optical data corresponding to at least two different types of emitting lights.

4. The sample analyzer of any one of claims 1 to 3, wherein, when displaying, for the at least one type of emitting light, the optical data corresponding to the detection wavelength and the at least one wavelength other than the detection wavelength in the plurality of light acquiring periods, the display is further configured to:
display, for the transmitted light, the optical data corresponding to the detection wavelength and the at least one wavelength other than the detection wavelength in the plurality of light acquiring periods; display, for the scattered light, the optical data corresponding to the detection wavelength in the plurality of light acquiring periods or display, for the scattered light, the optical data corresponding to the at least one wavelength other than the detection wavelength in the plurality of light acquiring periods; or
display, for the scattered light, the optical data corresponding to the detection wavelength and the at least one wavelength other than the detection wavelength in the plurality of light acquiring periods; display, for the transmitted light, the optical data corresponding to the detection wavelength in the plurality of light acquiring periods or display, for the transmitted light, the optical data corresponding to the at least one wavelength other than the detection wavelength in the plurality of light acquiring periods.

5. The sample analyzer of any one of claims 1 to 4, wherein the processor is further configured to identify, for the at least one type of emitting light, whether an abnormality occurs in the optical data corresponding to the detection wavelength and the at least one wavelength other than the detection wavelength in the plurality of light acquiring periods; and
in response to the abnormality in the optical data being identified by the processor, the display is further configured to prompt first prompt information for: at least one of a light acquiring period, a wavelength and a type of emitting light corresponding to the optical data with the abnormality; and/or a cause of the abnormality.

6. The sample analyzer of any one of claims 1 to 5, wherein, when displaying, for the at least one type of emitting light, the optical data corresponding to the detection wavelength and the at least one wavelength other than the detection wavelength in the plurality of light acquiring periods, the display is further configured to: for the at least one type of emitting light,
display, on a first three-dimensional (3D) curved surface, the optical data corresponding to the detection wavelength and the at least one wavelength other than the detection wavelength in the plurality of light acquiring periods, wherein three dimensions of the first 3D curved surface are a dimension of light acquiring period, a dimension of wavelength, and a dimension of optical data, respectively.

7. The sample analyzer of claim 6, wherein the processor is further configured to detect a viewing operation by a user, and in response to the viewing operation by the user being detected by the processor, the display is further configured to perform at least one of: rotating, scaling, and restoring to a preset angle and a preset size, on the first 3D curved surface.

8. The sample analyzer of any one of claims 1 to 7, wherein the optical signal acquisition component is configured to acquire, in each of the plurality of light acquiring periods, a signal sequence corresponding to each of the detection wavelength and the at least one wavelength other than the detection wavelength, wherein each signal sequence comprises light intensities of a plurality of optical signals and time for sampling each of the plurality of optical signals;
when calculating the optical data corresponding to the detection wavelength and the at least one wavelength other than the detection wavelength in each of the plurality of light acquiring periods based on the optical signals acquired in said light acquiring period, the processor is further configured to:
calculate the optical data corresponding to each of the detection wavelength and the at least one wavelength other than the detection wavelength in each of the plurality of light acquiring periods based on the respective signal sequence corresponding to the respective wavelength in said light acquiring period.

9. The sample analyzer of claim 8, wherein the display is further configured to display, for the at least one type of emitting light, signal sequences respectively corresponding to the detection wavelength and the at least one wavelength other than the detection wavelength in at least one of the plurality of light acquiring periods.

10. The sample analyzer of claim 9, wherein, when displaying the signal sequences respectively corresponding to the detection wavelength and the at least one wavelength other than the detection wavelength in the at least one of the plurality of light acquiring periods, the display is further configured to:
display, on a second 3D curved surface, signal sequences respectively corresponding to the detection wavelength and the at least one wavelength other than the detection wavelength in a target light acquiring period, wherein three dimensions of the second 3D curved surface are a dimension of time for sampling a plurality of optical signals in each signal sequence in the target light acquiring period, a dimension of wavelength, and a dimension of light intensity of each optical signal, respectively, wherein the target light acquiring period is a light acquiring period selected by a user or a light acquiring period in which an abnormal light signal exists.

11. The sample analyzer of claim 9 or 10, wherein the processor is further configured to identify, for the at least one type of emitting light, whether an abnormality occurs in the optical signals of the signal sequence corresponding to each of the detection wavelength and the at least one wavelength other than the detection wavelength in the at least one of the plurality of light acquiring periods; and
in response to the abnormality in the optical signals of the signal sequence being identified by the processor, the display is further configured to prompt second prompt information for: at least one of sampling time, a wavelength and a type of emitting light corresponding to the optical signal(s) with the abnormality; and/or a cause of the abnormality.

12. The sample analyzer of any one of claims 1 to 11, wherein the processor is further configured to determine a detection result of the sample to be detected based on the optical data; and
when displaying, for the at least one type of emitting light, the optical data corresponding to the detection wavelength and the at least one wavelength other than the detection wavelength in the plurality of light acquiring periods, the display is further configured to:
display, on a preset display interface, the detection result of the sample to be detected, and display, on the preset display interface, the optical data corresponding to the detection wavelength and the at least one wavelength other than the detection wavelength in the plurality of light acquiring periods for the at least one type of emitting light.

13. The sample analyzer of any one of claims 1 to 12, wherein the processor is further configured to determine a detection result of the sample to be detected based on the optical data; and
when displaying, for the at least one type of emitting light, the optical data corresponding to the detection wavelength and the at least one wavelength other than the detection wavelength in the plurality of light acquiring periods, the display is further configured to:
display, on a first display interface, the detection result of the sample to be detected; and
display, on a second display interface, the optical data corresponding to the detection wavelength and the at least one wavelength other than the detection wavelength in the plurality of light acquiring periods for the at least one type of emitting light, based on a detail viewing operation by a user on the detection result.

14. The sample analyzer of claim 9, wherein, when displaying the signal sequences respectively corresponding to the detection wavelength and the at least one wavelength other than the detection wavelength in the at least one of the plurality of light acquiring periods, the display is further configured to:
display, on a first region of a preset display interface, the optical data corresponding to the detection wavelength and the at least one wavelength other than the detection wavelength in the plurality of light acquiring periods; and
display, on a second region of the preset display interface, the signal sequences respectively corresponding to the detection wavelength and the at least one wavelength other than the detection wavelength in the at least one of the plurality of light acquiring periods.

15. A method for controlling a sample analyzer, comprising:
controlling a light source component of the sample analyzer to generate an irradiation light, wherein a plurality of types of emitting lights are emitted after the irradiation light irradiates a reaction product carried by a carrying component, the plurality of types of emitting lights comprise a transmitted light, a reflected light and a scattered light, and the reaction product is prepared by reaction of a reagent with a sample to be detected;
acquiring, in each of a plurality of light acquiring periods, optical signals, corresponding to a detection wavelength and at least one wavelength other than the detection wavelength, for at least one type of emitting light among the plurality of types of emitting lights, to repeatedly detect the reaction product carried by the carrying component over the plurality of light acquiring periods, wherein the detection wavelength comprises a primary wavelength, or a primary wavelength and a secondary wavelength;
calculating, for the at least one type of emitting light, optical data corresponding to the detection wavelength and the at least one wavelength other than the detection wavelength in each of the plurality of light acquiring periods based on the optical signals acquired in said light acquiring period, the optical data characterizing at least one of an absorption degree, a reflection degree and a scattering degree of the irradiation light by the reaction product; and
displaying, for the at least one type of emitting light, the optical data corresponding to the detection wavelength and the at least one wavelength other than the detection wavelength in the plurality of light acquiring periods.
